# EUROPÄISCHE PATENTSCHRIFT

(11) **EP 2 633 613 B1**
(45) Veröffentlichungstag und Bekanntmachung des Hinweises auf die Patenterteilung: **30.12.2015**
(21) Anmeldenummer: 11776755.8
(22) Anmeldetag: 26.10.2011
(51) Int. Cl.: H02M 7/5387

(54) **FREQUENZUMRICHTER**
FREQUENCY CONVERTER
CONVERTISSEUR DE FRÉQUENCE

(30) Priorität: 26.10.2010 DE 102010042946
(43) Veröffentlichungstag der Anmeldung: 04.09.2013
(73) Patentinhaber: Lenze Automation GmbH, 31855 Aerzen (DE)
(72) Erfinder: DÜSTERBERG, Dirk, 31860 Emmerthal (DE)
(74) Vertreter: Patentanwälte Ruff, Wilhelm, Beier, Dauster & Partner mbB
(86) Internationale Anmeldenummer: PCT/EP2011/068802
(87) Internationale Veröffentlichungsnummer: WO 2012/055937

(56) Entgegenhaltungen:
- DE-A1-102009 057 043
- DE-A1-102009 057 282
- WILHELM PETERS ET AL: "Regular-sampled current measurement in AC drives using delta-sigma modulators", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-9, XP031541731, ISBN: 978-1-4244-4432-8
- HAUSER M W: "PRINCIPLES OF OVERSAMPLING A/D CONVERSION", JOURNAL OF THE AUDIO ENGINEERING SOCIETY, AUDIO ENGINEERING SOCIETY, NEW YORK, NY, US, vol. 39, no. 1/02, 1 January 1991 (1991-01-01), pages 3-26, XP000202803, ISSN: 1549-4950

## Beschreibung

### Anwendungsgebiet und Stand der Technik

Die Erfindung betrifft einen Frequenzumrichter mit Betriebssignalüberwachung.

Beim Betrieb von Frequenzumrichtern ist es in der Regel notwendig, Betriebssignale in Form von Motorströmen und/oder Zwischenkreisspannungen zeitlich hoch aufgelöst zu erfassen, um Überströme bzw. Überspannungen möglichst verzögerungsfrei detektieren zu können. Auf diese Weise kann im Überstrom- bzw. Überspannungsfall schnell reagiert werden, um eine Beschädigung des Umrichters und/oder des Motors zu verhindern.

Zur Detektion von Überströmen bzw. Überspannungen ist es möglich, die Motorströme und/oder Zwischenkreisspannungen in analoger Form mittels eines analogen Komparators mit einem analogen Schwellenwert zu vergleichen. Alternativ können die Motorströme und/oder Zwischenkreisspannungen zunächst digitalisiert und anschließend mit einem digitalen Schwellenwert verglichen werden.

Zum Digitalisieren der Betriebssignale kann ein Sigma-Delta-Modulator mit nachgeschaltetem digitalen Sinc- oder Hogenauer-Filter verwendet werden.

Hierbei setzt der Sigma-Delta-Modulator das analoge Betriebssignal in eine binäre Zeichenfolge, d.h. in eine Folge von Bits, mit einer vorgegebenen Bitwiederholfrequenz, beispielsweise 10MHz, um. Das Sinc- oder Hogenauer-Filter erzeugt aus der binären Zeichenfolge aufeinanderfolgende, digitale Datenworte. In Abhängigkeit von einer Ordnung des Sinc- oder Hogenauer-Filters und einem Oversampling-Verhältnis werden die Datenworte mit einer Frequenz erzeugt, die um ein Vielfaches kleiner ist als die Bitwiederholfrequenz. Bei einem Oversampling-Verhältnis von 16 können die Datenworte beispielsweise mit einer Frequenz von 625kHz erzeugt werden, d.h. alle 1,6µs liegt ein neues Datenwort d.h. ein neuer Messwert vor.

Die Veröffentlichung von Wilhelm Peters et al. ("Regular-sampled current measurement in AC drives using delta-sigma modulators", 13th European Conference on Power Electronics and Applications, 2009: EPE '09; 8-10 Sept. 2009, Barcelona, Spain, IEEE, Piscataway, NJ, USA, 8. September 2009 (2009-09-08), Seiten 1-9) zeigt die Verwendung von Sigma-Delta-Modulatoren in der elektrischen Antriebstechnik, wobei ein mittels eines Sigma-Delta-Modulators erzeugter Bitstrom zunächst bitratenreduziert und anschließend ausgewertet wird.

### Aufgabe und Lösung

Der Erfindung liegt die Aufgabe zugrunde, einen Frequenzumrichter mit Betriebssignalüberwachung zur Verfügung zu stellen, der eine zeitlich hoch aufgelöste Überwachung des Betriebssignals ermöglicht.

Die Erfindung löst diese Aufgabe durch einen Frequenzumrichter mit den Merkmalen des Anspruchs 1.

Bevorzugte Ausführungsformen sind Gegenstand der Unteransprüche, deren Wortlaut hiermit durch Bezugnahme zum Inhalt der Beschreibung gemacht wird.

Der Frequenzumrichter mit Betriebssignalüberwachung umfasst eine Schaltung zum Digitalisieren eines analogen, zu überwachenden Betriebssignals. Diese Schaltung umfasst einen herkömmlichen Sigma-Delta-Modulator, der das analoge Signal in eine binäre Zeichenfolge bzw. eine Folge von Bits mit einer vorgegebenen Bitwiederholfrequenz, beispielsweise 10MHz, umsetzt, und ein digitales Filter, das aus der binären Zeichenfolge aufeinanderfolgende, digitale Datenworte mit einer vorgegebenen Anzahl von Bits, beispielsweise 9 Bits, erzeugt, wobei das digitale Filter dazu ausgebildet ist, die aufeinanderfolgenden Datenworte mit der Bitwiederholfrequenz zu erzeugen. Weiter ist eine digitale Auswerteschaltung im Frequenzumrichter vorgesehen, die die aufeinanderfolgenden Datenworte mit der Bitwiederholfrequenz zum Überwachen des Betriebssignals auswertet. Da die Bitwiederholfrequenz und die Frequenz, mit der die aufeinanderfolgenden Datenworte erzeugt werden, identisch sind, nimmt die zeitliche Auflösung des digitalisierten Betriebssignals im Vergleich zu der herkömmlichen Digitalisierung zu, bei der die Datenworte mit einer Frequenz erzeugt werden, die um ein Vielfaches kleiner ist als die Bitwiederholfrequenz des Sigma-Delta-Modulators.

In einer Weiterbildung ist das Betriebssignal ein Motorstrom eines mittels des Frequenzumrichters angesteuerten Motors und/oder eine Zwischenkreisspannung.

In einer Weiterbildung ist das digitale Filter ein FIR(Finite Impulse Response)-Filter. Das FIR-Filter ist dazu ausgebildet, an seinem Ausgang das Datenwort als gewichtete Summe einer vorgegebenen Anzahl, beispielsweise 33, von aufeinanderfolgenden Bitwerten der vom Sigma-Delta-Modulator ausgegebenen binären Zeichenfolge zu erzeugen. Das FIR-Filter enthält bevorzugt eine Anzahl von in Serie geschalteten Verzögerungsgliedern (115), eine Anzahl von Summiergliedern (117) und eine Anzahl von Koeffizientengliedern (116).

### Kurzbeschreibung der Zeichnung

Vorteilhafte Ausführungsformen der Erfindung sind in den Zeichnungen schematisch dargestellt und werden nachfolgend beschrieben. Hierbei zeigt:
- Fig. 1: ein Blockdiagramm eines erfindungsgemäßen Frequenzumrichters mit Betriebssignalüberwachung,
- Fig. 2: ein Blockdiagramm eines FIR-Filters, das in dem in Fig. 1 gezeigten Frequenzumrichter enthalten ist, und
- Fig. 3: Werteänderungen von Datenworten eines herkömmlichen Filters und des in Fig. 2 gezeigten Filters über der Zeit bei einer sprungförmigen Änderung des Betriebssignals.

### Detaillierte Beschreibung der Ausführungsbeispiele

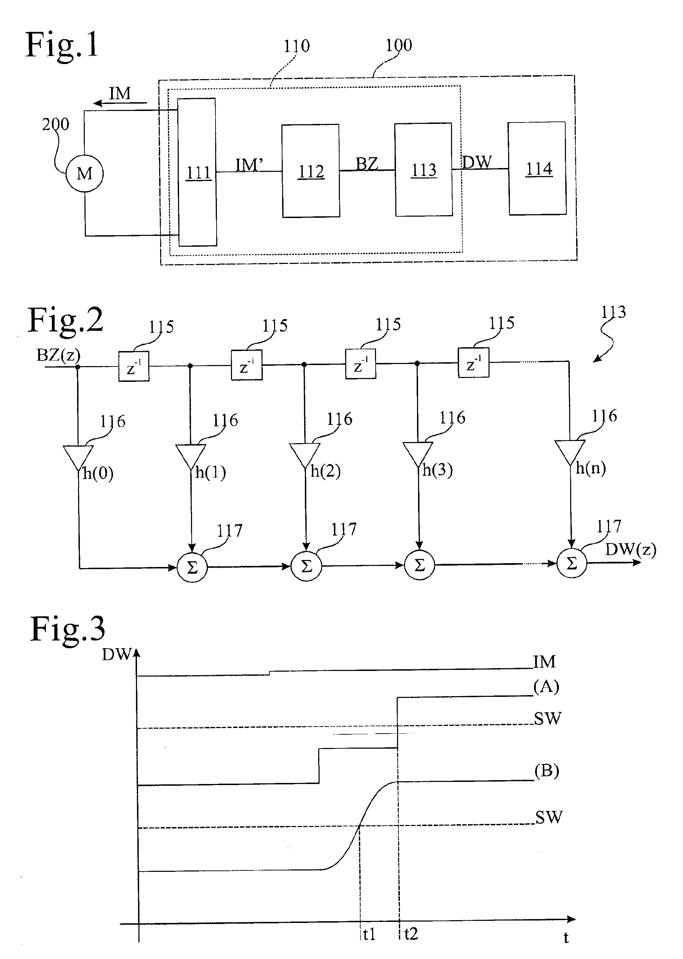

Fig. 1 zeigt ein Blockdiagramm eines erfindungsgemäßen Frequenzumrichters 100 mit Betriebssignalüberwachung.

Der Frequenzumrichter 100 umfasst eine Schaltung 110 zum Digitalisieren eines analogen, zu überwachenden Betriebssignals in Form eines Motorstroms IM, der von einem an den Frequenzumrichter 100 angeschlossenen Motor 200 aufgenommen wird. Es versteht sich, dass anstatt des Motorstroms IM auch eine Zwischenkreisspannung überwacht werden kann. Selbstverständlich können auch mehrere Schaltungen 110 zum Überwachen mehrerer unterschiedlicher Betriebssignale im Frequenzumrichter 100 vorgesehen sein.

Die Schaltung 110 umfasst einen optionalen Signalkonditionierer 111, der aus dem Motorstrom IM ein entsprechendes Signal IM' mit geeigneten Pegel erzeugt, einen herkömmlichen Sigma-Delta-Modulator 112, beispielsweise erster oder zweiter Ordnung, der das dem Motorstrom IM entsprechende analoge Signal IM' in eine binäre Zeichenfolge bzw. Folge von Bits BZ mit einer vorgegebenen, konstanten Bitwiederholfrequenz von 10MHz umsetzt, und ein digitales FIR-Filter 113, das aus der binären Zeichenfolge BZ aufeinanderfolgende, digitale 9-Bit-Datenworte DW erzeugt, wobei das digitale FIR-Filter 113 dazu ausgebildet ist, die aufeinanderfolgenden Datenworte DW mit der Bitwiederholfrequenz, d.h. mit 10MHz, zu erzeugen.

Der Frequenzumrichter 100 umfasst weiter eine digitale Auswerteschaltung 114, die die aufeinanderfolgenden Datenworte DW mit der Bitwiederholfrequenz zum Überwachen des Betriebssignals auswertet.

Die Auswerteschaltung 114 steuert den Betrieb des Frequenzumrichters 100 derart, dass für den Fall, dass der Motorstrom IM einen Schwellenwert überschreitet, der Frequenzumrichter einen sicheren Betriebszustand einnimmt, d.h. der Motorstrom wieder unter den Schwellenwert absinkt.

Fig. 2 zeigt ein detailliertes Blockdiagramm des FIR-Filters 113 von Fig. 1 in Normalform.

Das FIR-Filter 113 ist dazu ausgebildet ist, an seinem Ausgang das Datenwort DW(z) als gewichtete Summe einer vorgegebenen Anzahl n, mit beispielsweise n=33, von aufeinanderfolgenden Bitwerten der vom Sigma-Delta-Modulator ausgegebenen binären Zeichenfolge BZ(z) zu erzeugen.

Hierzu umfasst das FIR-Filter 113 eine Anzahl n von Verzögerungsgliedern bzw. Speicherelementen 115, eine Anzahl n+1 von Koeffizientengliedern 116 mit zugehörigen Koeffizienten h(0) bis h(n) und eine Anzahl n von Summiergliedern 117, die in der gezeigten Topologie miteinander verschaltet sind. Es versteht sich, dass das FIR-Filter 113 auch geeignet optimiert werden kann, um beispielsweise Multiplikationen im Kontext der Koeffizientenglieder 116, die nicht mittels einer einfachen Schiebeoperation durchgeführt werden können, effizienter durchführen zu können.

Fig. 3 zeigt in Kurve A Werte von Datenworten DW, die von einem herkömmlichen Filter mit einem Oversampling-Verhältnis von 16 ausgegeben werden, und in Kurve B Werte von Datenworten DW, die von dem in Fig. 2 gezeigten Filter 113 ausgegeben werden, über der Zeit bei einer sprungförmigen Änderung des Betriebssignals IM.

Die Werte DW des in Fig. 2 gezeigten Filters 113 ändern sich im Takt des Sigma-Delta-Modulators 112, d.h. mit einer Frequenz von 10MHz, wohingegen sich die Werte DW des herkömmlichen Filters mit einer Frequenz von 10MHz/16 ändern.

Wie aus Fig. 3 hervorgeht, erreichen die vom Filter 113 ausgegebenen Datenworte DW zu einem Zeitpunkt t1 eine gedachte Überwachungsschwelle SW, wohingegen die von dem herkömmlichen Filter ausgegebenen Datenworte erst zu einem wesentlich späteren Zeitpunkt t2 die gedachte Überwachungsschwelle SW erreichen.

Der erfindungsgemäße Frequenzumrichter ermöglicht folglich eine Betriebssignalüberwachung, die eine zeitlich hoch aufgelöste Überwachung des Betriebssignals ermöglicht, sodass Störungen verglichen mit herkömmlichen Lösungen schneller erkannt werden können.

## Patentansprüche

1. Frequenzumrichter (100) mit Betriebssignalüberwachung, umfassend:
- eine Schaltung (110) zum Digitalisieren eines analogen, zu überwachenden Betriebssignals (IM), mit:
- einem Sigma-Delta-Modulator (112), der das Betriebssignal in eine binäre Zeichenfolge (BZ) mit einer vorgegebenen Bitwiederholfrequenz umsetzt, und
- einem digitalen Filter (113), das aus der binären Zeichenfolge aufeinanderfolgende, digitale Datenworte (DW) mit einer vorgegebenen Anzahl von Bits erzeugt, wobei die Datenworte (DW) als gewichtete Summe einer vorgegebenen Anzahl von aufeinanderfolgenden Bitwerten der vom Sigma-Delta-Modulator (112) ausgegebenen binären Zeichenfolge (BZ) erzeugt sind, wobei das digitale Filter (113) dazu ausgebildet ist, die aufeinanderfolgenden Datenworte (DW) mit der Bitwiederholfrequenz zu erzeugen, und
- eine digitale Auswerteschaltung (114), die die aufeinanderfolgenden Datenworte (DW) mit der Bitwiederholfrequenz zum Überwachen des Betriebssignals (IM) auswertet.

2. Frequenzumrichter nach Anspruch 1, **dadurch gekennzeichnet, dass** das Betriebssignal ein Motorstrom (IM) und/oder eine Zwischenkreisspannung ist.

3. Frequenzumrichter nach Anspruch 1 oder 2, **dadurch gekennzeichnet, dass** das digitale Filter ein FIR-Filter ist.

4. Frequenzumrichter nach einem der vorhergehenden Ansprüche, **dadurch gekennzeichnet, dass** das FIR-Filter eine Anzahl von in Serie geschalteten Verzögerungsgliedern (115), eine Anzahl von Summiergliedern (117) und eine Anzahl von Koeffizientengliedern (116) umfasst.

## Claims

1. Frequency converter (100) with operating signal monitoring, comprising:
- a circuit (110) for digitizing an analog operating signal (IM) to be monitored, including:
- a sigma-delta modulator (112) to convert the operating signal into a binary string of characters (BZ) with a predetermined bit repetition frequency, and
- a digital filter (113) to generate from the binary string of characters successive digital data words (DW) with a predetermined number of bits, wherein the data words (DW) are generated as a weighted sum of a predetermined number of successive bit values of the binary string of characters (BZ) outputted from the sigma-delta modulator (112), wherein the digital filter (113) is arranged to generate the successive data words (DW) with the bit repetition frequency, and
- a digital evaluation circuit (114) to evaluate the successive data words (DW) with the bit repetition frequency for monitoring the operating signal (IM).

2. Frequency converter according to claim 1, **characterized in that** the operating signal is a motor current (IM) and/or an intermediate circuit voltage.

3. Frequency converter according to claim 1 or 2, **characterized in that** the digital filter is a FIR filter.

4. Frequency converter according to any one of the preceding claims, **characterized in that** the FIR filter comprises, connected in series, a number of delay elements (115), a number of summing elements (117) and a number of coefficient elements (116).

## Revendications

1. Convertisseur de fréquence (100) comportant un dispositif de surveillance de signal de fonctionnement, comprenant :
- un circuit (110) destiné à numériser un signal de fonctionnement analogique à surveiller (IM), comportant :
- un modulateur sigma-delta (112) qui convertit le signal de fonctionnement en une série de symboles binaires (BZ) présentant une fréquence de répétition de bits prédéterminée, et
- un filtre numérique (113) qui génère à partir de la séquence de symboles binaires des mots de données numériques (DW) consécutifs ayant un nombre prédéterminé de bits, dans lequel les mots de données (DW) sont générés sous la forme d'une somme pondérée d'un nombre prédéterminé de valeurs de bits consécutives de la séquence de symboles binaires (BZ) délivrée par le modulateur sigma-delta (112), dans lequel le filtre numérique (113) est conçu pour générer les mots de données consécutifs (DW) avec la fréquence de répétition de bits, et
- un circuit d'évaluation numérique (114) qui évalue les mots de données consécutifs (DW) présentant la fréquence de répétition de bits pour surveiller le signal de fonctionnement (IM).

2. Convertisseur de fréquence selon la revendication 1, **caractérisé en ce que** le signal de fonctionnement est un courant de moteur (IM) et/ou une tension de circuit intermédiaire.

3. Convertisseur de fréquence selon la revendication 1 ou 2, **caractérisé en ce que** le filtre numérique est un filtre FIR.

4. Convertisseur de fréquence selon l'une quelconque des revendications précédentes, **caractérisé en ce que** le filtre FIR comprend un certain nombre d'éléments à retard connectés en série (115), un certain nombre d'éléments sommateurs (117) et un certain nombre d'éléments à coefficients (116).
